# EUROPEAN PATENT APPLICATION

(11) **EP 2 687 562 A1**
(43) Date of publication of application: **22.01.2014**
(21) Application number: 12757140.4
(22) Date of filing: 17.01.2012
(51) Int. Cl.: C08L 101/00, C08K 3/00, C08K 5/3417, F21V 3/00, F21V 3/04, G02B 5/02, F21Y 101/02

(54) **LIGHT-DIFFUSING RESIN COMPOSITION AND LIGHT-DIFFUSING SHEET USING SAME**

(30) Priority: 16.03.2011 JP 2011057527; 18.11.2011 JP 2011253153
(71) Applicant: Adeka Corporation, Tokyo 116-8554 (JP)
(72) Inventor: OKADA, Mitsuhiro, Tokyo 116-8554 (JP); SHIGENO, Koichi, Tokyo 116-8554 (JP); KANEHARA, Yukiko, Tokyo 116-8554 (JP)
(74) Representative: Forstmeyer, Dietmar
(86) International application number: PCT/JP2012/050812
(87) International publication number: WO 2012/124365

(57) **Abstract**

The present invention provides a light-diffusing resin composition capable of realizing high color rendering properties and brightness when used in light-diffusing sheets, and a light-diffusing sheet and a light source unit using same. Provided are the light-diffusing resin composition including a binder resin (A) preferably in 1 to 80 mass%, a light-diffusing agent (B) preferably in 15 to 95 mass%, and a trimethine cyanine compound (C) represented by formula (I) preferably in 0.0001 to 5 mass%; and the light-diffusing sheet using the light-diffusing resin composition in a light-diffusing layer. The light source unit has the light-diffusing sheet and a light source, preferably a white LED.

## Description

### TECHNICAL FIELD

The present invention relates to a light-diffusing resin composition including a trimethine cyanine compound having a specific structure, and a light-diffusing sheet using the same. The light-diffusing resin composition and the light-diffusing sheet of the present invention are useful for display devices, such as liquid crystal displays, PDPs, and organic electroluminescent displays; display panels of image sensors, personal computers, word processors, audio equipment, video equipment, car navigation systems, telephones, personal digital assistants, and industrial instruments; lighting equipment, such as fluorescent lamps, LEDs, and EL lamps.

### BACKGROUND ART

In liquid crystal display devices used for television, personal computers, cellular phones, game machines, and so on, a back light unit is arranged on a rear side and images are displayed using the light emitted by the back light unit. Light from the back light unit is desired to be bright and uniform light in order to make images and pictures easier to view, and it is possible to take out uniform light by the use of a light-diffusing board or a light-diffusing sheet.

White light-emitting diodes (white LEDs), which consume less electricity, have longer lifetime, and are smaller than conventional cold cathode fluorescent lamps (CCFLs), are becoming a major trend as a light source of a back light. Similarly in lighting applications, white LEDs, which are superior in lifetime or electricity consumption, are being studied actively.

However, since white LED light are low in color rendering property, adjustment by including various wavelength absorbing materials in the light-diffusing board or sheet is needed. However, such wavelength absorbing materials improve color rendering properties through the absorption of unnecessary light, but at the same time they problematically deteriorate brightness.

As a measure for this, the use of a dye (fluorescent colorant) capable of absorbing unnecessary light and emitting desired light have been studied (see, for example, patent literatures 1 to 3).

On the other hand, a method for evaluating the color rendering property of a light source/a lighting device is provided in JIS Z8726 (Method of Specifying Colour Rendering Properties of Light Sources), and there is adopted a method in which how much different appearance from the color produced by the application of the standard light is observed upon the application of 15 test colors is expressed by color difference and then a color rendering index is calculated. Especially, an index expressed as a general color rendering index (Ra) is the difference between the standard light and every test light at general color rendering evaluation colors of test Nos. 1 to 8, the difference being expressed by an average value. The closer to 100 the index is, the higher the color rendering property is.

### CITATION LIST

### PATENT LITERATURE

Patent Literature 1: US 2006/109682 A
Patent Literature 2: JP 2009-043611 A
Patent Literature 3: US 2008/174874 A

### SUMMARY OF INVENTION

### TECHNICAL PROBLEM

However, the dyes (fluorescent colorants) disclosed in patent literatures 1 to 3 are unsatisfying in color rendering property, chromaticity, and brightness.

Therefore, the objective of the present invention is to provide a light-diffusing resin composition capable of realizing high color rendering property, chromaticity, and brightness when being used for a light-diffusing sheet, and a light-diffusing sheet and a light source unit using the same.

### SOLUTION TO PROBLEM

As a result of earnest studies, the present inventors found that the above-described objective can be attained by a light-diffusing resin composition in which a trimethine cyanine compound having a specific structure is included as a dye (fluorescent colorant) and a light-diffusing sheet using the same.

The present invention was devised on the basis of the above-described finding and can provide the light-diffusing resin composition containing a binder resin (A), a light-diffusing agent (B), and the trimethine cyanine compound (C) represented by the general formula (I). 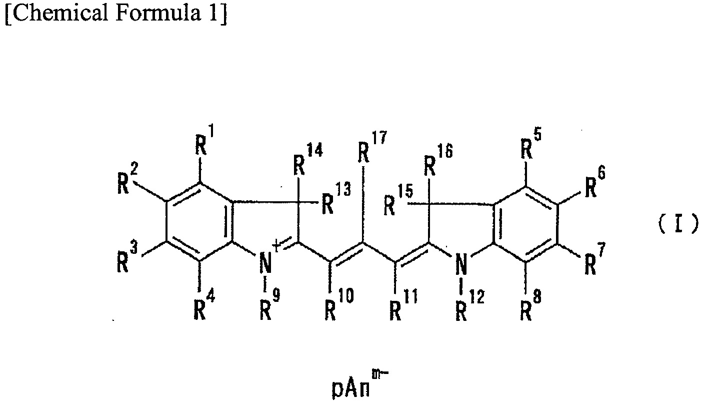 wherein R¹ through R¹⁷ each independently represent a hydrogen atom, a halogen atom, a nitro group, a cyano group, an aldehyde group, a carboxyl group, a hydroxy group, -NRR', an optionally substituted alkyl group having 1 to 20 carbon atoms, an optionally substituted aryl group having 6 to 20 carbon atoms, or an optionally substituted arylalkyl group having 7 to 20 carbon atoms, and R and R' each independently represent a hydrogen atom, an optionally substituted alkyl group having 1 to 20 carbon atoms, or an optionally substituted aryl group having 6 to 20 carbon atoms; methylene groups in the alkyl group and the arylalkyl groups and a junction between the aryl group and an indolenine ring or a trimethine chain may be interrupted by -O-, -S-, -SO₂ -CO-, -OCO-, or -COO-, hydrocarbon chains in the alkyl group and the arylalkyl group may have a double bond or a triple bond, and R¹³ and R¹⁴, R¹⁵ and R¹⁶, and adjacent groups out of R¹ to R⁴ and R⁵ to R⁸ may be linked to form a ring,
with the proviso that at least one out of R¹ to R⁸ represents a nitro group or a trifluoromethyl group;
An^{m-} represents an anion of valency m, m represents an integer of 1 or 2, and p represents a coefficient to keep charge neutral.

The present invention provides the light-diffusing sheet having a transparent substrate layer and a light-diffusing layer formed on at least one side of the substrate layer, wherein the light-diffusing layer is made of the above-mentioned light-diffusing resin composition.

In addition, the present invention provides a light source unit having the above-mentioned light-diffusing sheet and a light source (especially, an LED light source).

### ADVANTAGEOUS EFFECTS OF INVENTION

According to the present invention, a light-diffusing resin composition can be provided which can realize high color rendering properties, chromaticity, and brightness when used in a light-diffusing sheet. Since the light-diffusing sheet using this light-diffusing resin composition is high in color rendering property and brightness, it is suitable for a light source unit.

### BRIEF DESCRIPTION OF DRAWINGS

Fig. 1(a) is a schematic sectional view illustrating one embodiment of a direct-lit light source unit to which a light-diffusing sheet of the present invention is applied.
Fig. 1(b) is a schematic sectional view illustrating another embodiment of a direct-lit light source unit to which the light-diffusing sheet of the present invention is applied. The light source unit of Fig. 1(b) is reverse to the light source unit of Fig. 1(a) in the configuration of the light-diffusing sheet with respect to a light source.
Fig. 2 is a schematic sectional view illustrating one embodiment of an edge light type light source unit to which the light-diffusing sheet of the present invention is applied.
Fig. 3 is a schematic sectional view illustrating another embodiment of a light source unit to which the light-diffusing sheet of the present invention is applied.
Fig. 4(a) is a schematic sectional view explaining the method of measuring the brightness of the Red component of a light-diffusing sheet in Example 7 and Comparative Examples 8 and 9.
Fig. 4(b) is a schematic sectional view explaining the method of measuring the brightness of the Red component of the light-diffusing sheet in Comparative Example 7.

### DESCRIPTION OF EMBODIMENTS

A light-diffusing resin composition, a light-diffusing sheet, and a light source unit of the present invention are described in detail below on the basis of preferred embodiments.

The light-diffusing resin composition of the present invention contains a binder resin (A), a light-diffusing agent (B), and a trimethine cyanine compound (C) represented by the general formula (I) given above. The respective ingredients will be described successively below.

### <Binder resin (A)>

The binder resin (A) to be used for the present invention is preferably one having a function of bonding particles of the light-diffusing agent (B), having good compatibility with the trimethine cyanine compound (C), and being high in adhesion to a transparent substrate layer described below. Examples of the binder resin (A) include cellulose esters such as diacetylcellulose, triacetylcellulose (TAC), propionylcellulose, butyrylcellulose, acetylpropionylcellulose, and nitrocellulose; polyamides; polyesters such as polyethylene terephthalate, polyethylene naphthalate, polybutylene terephthalate, poly-1,4-cyclohexane dimethylene terephthalate, polyethylene-1,2-diphenoxyethane 4,4'-dicarboxylate, and polybutylene terephthalate; polystyrenes; polyolefins such as polyethylene, polypropylene, and polymethylpentene; acrylic resins such as polymethyl methacrylate (PMMA), polymethyl acrylate, polyisobutyl methacrylate, polytrifluoroethyl methacrylate, poly-2,3-dibromopropyl methacrylate, polyphenyl methacrylate, polypentachlorophenyl methacrylate, and methyl methacrylate-(meth)acrylic acid ester copolymers; polycarbonates; polysulfones; polyethersulfones; polyetherketones; polyetherimides; polyoxyethylenes; ABS resins (acrylonitrile-styrene-butadiene copolymers); MS resins (methyl-methacrylic acid-styrene copolymers); AS resins (acrylonitrile-styrene copolymers); and norbornene resins. Of these resins, acrylic resins and MS resins are used particularly preferably because of their high transparency.

A thermosetting resin can also be used as the binder resin (A) to be used for the present invention. The thermosetting resin is just required to have thermosetting property as well as the performance which the above-described binder resin (A) is required to have, i.e., "having a function of bonding particles of the light-diffusing agent (B), having good compatibility with the trimethine cyanine compound (C), and being high in adhesion to a transparent substrate layer described below" and examples thereof include the polymer compositions containing polyols such as acrylic polymers and polyesterpolyols disclosed in JP 2004-198707 A. In the case of using the thermosetting resin as the binder resin (A), the light-diffusing resin composition of the present invention preferably contains a crosslinking agent (preferably in an amount of 1 to 50 parts by mass based on 100 parts by mass of the thermosetting resin); examples of the crosslinking agent include polyisocyanate compounds.

A photocurable resin also may be used as the binder resin (A) of the present invention. The photocurable resin is just required to have photocurability as well as the performance which the above-described binder resin (A) is required to have, i.e., "having a function of bonding particles of the light-diffusing agent (B), having good compatibility with the trimethine cyanine compound (C), and being high in adhesion to a transparent substrate layer described below" and examples thereof include ones composed of a photopolymerizable unsaturated compound and/or an epoxy compound. Examples of the photopolymerizable unsaturated compound and/or the epoxy compound include monofunctional (meth)acrylates, polyfunctional (meth)acrylates, epoxy (meth)acrylates, and urethane (meth)acrylates. In the event that the photocurable resin is used as the binder resin (A), the light-diffusing resin composition of the present invention preferably contains a photopolymerization initiator (preferably in an amount of 0.1 to 10 parts by mass based on 100 parts by mass of the photocurable resin). The photopolymerization initiator is not particularly restricted as long as it is one capable of generating radicals upon the application of light, but preferred is one that exhibits no absorption of visible light before and after the application of light; examples thereof include photoradical initiators such as alkylphenone type photoradical initiators and oxime type photoradical initiators, and photoacid generators such as onium type photoacid generators and sulfonium type photoacid generators.

### <Light-diffusing agent (B)>

As the light-diffusing agent (B) to be used for the present invention, an agent is used which has an index of refraction of D ray at room temperature of preferably 1.0 to 2.0, more preferably 1.3 to 1.7 and an average particle diameter of preferably 0.1 to 50 µm, more preferably 1 to 30 µm; examples thereof include inorganic particles such as glass beads, silica particles, aluminum hydroxide particles, calcium carbonate particles, barium carbonate particles, and titanium oxide particles; organic particles such as crosslinked styrene resin particles, crosslinked acrylic resin particles, and crosslinked silicone resin particles; and inorganic-organic particles such as inorganic powder-acrylic resin particles. Of these particles, organic particles are preferable because they are easy to be dispersed in a light-diffusing resin composition uniformly.

Even a layer using no light diffusing agent (a resin layer) can afford light superior in color rendering property. However, there occurs a phenomenon such that light emitted with wavelength conversion in the resin layer reflects on the interface between the resin layer and the air and then stays within the resin layer or is emitted from an edge face of the resin layer, and the phenomenon leads to decrease in the quantity of light emitted in front and then causes decrease in brightness. On the other hand, if the light-diffusing agent is incorporated in the resin layer, the reduce of brightness caused by the phenomenon mentioned above will be suppressed. For this reason, the light-diffusing agent is necessary.

### <Trimethine cyanine compound (C)>

The trimethine cyanine compound (C) represented by the general formula (I) to be used for the present invention is an agent that improves the color purity of the light which the light source unit of the present invention emits and prevents the reduce of brightness by emitting fluorescence.

Examples of the optionally substituted alkyl group having 1 to 20 carbon atoms represented by R¹ through R¹⁷, R, and R' in the general formula (I) include linear, branched, and cyclic alkyl groups such as methyl, ethyl, propyl, isopropyl, butyl, sec-butyl, tert-butyl, isobutyl, amyl, isoamyl, tert-amyl, hexyl, heptyl, isoheptyl, tert-heptyl, n-octyl, isooctyl, tert-octyl, 2-ethylhexyl, n-nonyl, n-decyl, n-dodecyl, n-tridecyl, n-tetradecyl, n-pentadecyl, n-hexadecyl, n-heptadecyl, n-octadecyl, cyclopropyl, cyclobutyl, cyclopentyl, cyclohexyl, cycloheptyl, cyclooctyl, cyclononyl, and cyclodecyl. Examples of a group in which a methylene group in the alkyl group is interrupted by -O- include methoxy, ethoxy, propyloxy, isopropyloxy, methoxymethyl, ethoxymethyl, and 2-methoxyethyl, examples of a group in which a methylene group in the alkyl group is interrupted by -S- include methylthio, ethylthio, butylthio, and pentylthio, examples of a group in which a methylene group in the alkyl group is interrupted by -SO₂- include methylsulfonyl, ethylsulfonyl, butylsulfonyl, and pentylsulfonyl, examples of a group in which a methylene group in the alkyl group is interrupted by -CO- include acetyl, 1-carbonylethyl, acetylmethyl, 1-carbonylpropyl, 2-oxobutyl, 2-acetylethyl, 1-carbonylisopropyl, and cyclopentane carbonyl, examples of a group in which a methylene group in the alkyl group is interrupted by -OCO- include an acetoxy group, a propionyloxy group, and a butyryloxy group, and examples of a group in which a methylene group in the alkyl group is interrupted by -COO- include a methoxycarbonyl group, an ethoxycarbonyl group, and an isopropyloxycarbonyl group.

Examples of the optionally substituted aryl group having 6 to 20 carbon atoms represented by R¹ through R¹⁷ , R and R' in the general formula (I) include a phenyl group, a naphthyl group, and a biphenyl group, examples of a group in which a junction between the aryl group and an indolenine ring or a trimethine chain (hereinafter also referred to as a junction of the aryl group) is interrupted by -O- include phenoxy, 1-naphthoxy, and 2-naphthoxy, examples of a group in which the junction of the aryl group is interrupted by -S- include phenylthio, 1-naphthylthio, and 2-naphthylthio, examples of a group in which the junction of the aryl group is interrupted by -SO₂-include phenylsulfone, 1-naphthylsulfone, and 2-naphthylsulfone, examples of a group in which the junction of the aryl group is interrupted by -CO- include benzoyl, 1-naphthoyl, and 2-naphthoyl, examples of a group in which the junction of the aryl group is interrupted by -OCO- include benzoyloxy, 1-naphthoyloxy, and 2-naphthoyloxy, and examples of a group in which the junction of the aryl group is interrupted by -COO- include a phenoxycarbonyl group and a 1-naphthoxycarbonyl group.

Examples of the optionally substituted arylalkyl group having 7 to 20 carbon atoms represented by R¹ through R¹⁷ in the general formula (I) include benzyl, phenethyl, 2-phenylpropyl, diphenylmethyl, triphenylmethyl, and 4-chlorophenyl methyl; examples of a group in which a methylene group in the alkyl group is interrupted by -O- include benzyloxy, phenoxymethyl, phenoxyethyl, a 1-naphthylmethoxy group, a 2-naphthylmethoxy group, and 1-anthrylmethoxy, examples of a group in which a methylene group in the alkyl group is interrupted by -S-include benzylthio, phenylthiomethyl, and phenylthioethyl, examples of a group in which a methylene group in the alkyl group is interrupted by -SO₂- include benzylsulfonyl, examples of a group in which a methylene group in the alkyl group is interrupted by -CO- include a benzylcarbonyl group, phenethylcarbonyl, and a 1-naphthylmethylcarbonyl group, examples of a group in which a methylene group in the alkyl group is interrupted by -OCO- include a phenylacetate group and a 1-naphthylacetate group, and examples of a group in which a methylene group in the alkyl group is interrupted by -COO- include a benzyloxycarbonyl group and a phenethyloxycarbonyl group.

Examples of a halogen atom represented by R¹ through R¹⁷ in the general formula (1) include fluorine, chlorine, bromine, and iodine.

Examples of a substituent of the optionally substituted alkyl group having 1 to 20 carbon atoms, the optionally substituted aryl group having 6 to 20 carbon atoms, and the optionally substituted arylalkyl group having 7 to 20 carbon atoms include alkyl groups such as methyl, ethyl, propyl, isopropyl, cyclopropyl, butyl, secondary butyl, tertiary butyl, isobutyl, amyl, isoamyl, tertiary amyl, cyclopentyl, hexyl, 2-hexyl, 3-hexyl, cyclohexyl, bicyclohexyl, 1-methylcyclohexyl, heptyl, 2-heptyl, 3-heptyl, isoheptyl, tertiary heptyl, n-octyl, isooctyl, tertiary octyl, 2-ethylhexyl, nonyl, isononyl, and decyl; alkoxy groups such as methyloxy, ethyloxy, propyloxy, isopropyloxy, butyloxy, secondary butyloxy, tertiary butyloxy, isobutyloxy, amyloxy, isoamyl oxy, tertiary amyloxy, hexyloxy, cyclohexyloxy, heptyloxy, isoheptyloxy, tertiary heptyloxy, n-octyloxy, isooctyloxy, tertiary octyloxy, 2-ethylhexyloxy, nonyloxy, and decyloxy; alkylthio groups such as methylthio, ethylthio, propylthio, isopropylthio, butylthio, secondary butylthio, tertiary butylthio, isobutylthio, amylthio, isoamylthio, tertiary amylthio, hexylthio, cyclohexylthio, heptylthio, isoheptylthio, tertiary heptylthio, n-octylthio, isooctylthio, tertiary octylthio, and 2-ethylhexylthio; alkenyl groups such as vinyl, 1-methylethenyl, 2-methylethenyl, 2-propenyl, 1-methyl-3-propenyl, 3-butenyl, 1-methyl-3-butenyl, isobutenyl, 3-pentenyl, 4-hexenyl, cyclohexenyl, bicyclohexenyl, heptenyl, octenyl, decenyl, pentadecenyl, eicosenyl, and tricosenyl; arylalkyl groups such as benzyl, phenethyl, diphenylmethyl, triphenylmethyl, styryl, and cinnamyl; aryl groups such as phenyl and naphthyl; aryloxy groups such as phenoxy and naphthyloxy; arylthio groups such as phenylthio and naphthylthio; halogen atoms such as fluorine, chlorine, bromine, and iodine; acyl groups such as acetyl, 2-chloroacetyl, propionyl, octanoyl, acryloyl, methacryloyl, phenylcarbonyl (benzoyl), phthaloyl, 4-trifluoromethylbenzoyl, pivaloyl, salicyloyl, oxaloyl, stearoyl, methoxycarbonyl, ethoxycarbonyl, tert-butoxycarbonyl, n-octadecyloxycarbonyl, and carbamoyl; acyloxy groups such as acetyloxy and benzoyloxy; substituted amino groups such as amino, ethylamino, dimethylamino, diethylamino, butylamino, cyclopentylamino, 2-ethylhexylamino, dodecylamino, anilino, chlorophenylamino, toluidino, anisidino, N-methylanilino, diphenylamino, naphthylamino, 2-pyridylamino, methoxycarbonylamino, phenoxycarbonylamino, acetylamino, benzoylamino, formylamino, pivaloyl amino, lauroyl amino, carbamoylamino, N,N-dimethylamino carbonylamino, N,N-diethylamino carbonylamino, morpholinocarbonylamino, methoxycarbonylamino, ethoxycarbonylamino, tert-butoxycarbonylamino, n-octadecyloxycarbonylamino, N-methyl-methoxycarbonylamino, phenoxycarbonylamino, sulfamoylamino, N,N-dimethylaminosulfonylamino, methylsulfonylamino, butylsulphonylamino, and phenylsulfonylamino; a sulfonamide group, a sulfonyl group, a carboxyl group, a cyano group, a sulfo group, a hydroxy group, a nitro group, a mercapto group, an imide group, a carbamoyl group, and a sulfonamide group; these groups may be further substituted with the groups provided above. The carboxyl group and the sulfo group may have formed a salt. In the case of being substituted with a substituent having a carbon atom, the total number of carbon atoms of the group satisfies the ranges specified above.

A cation of the trimethine cyanine compound (C) represented by the general formula (1) given above (hereinafter also referred to as a trimethine cyanine cation), which has a resonance structure as represented by the following [Chem. 2], may be of either a structural formula of the following general formula (X) or a structural formula of the following general formula (Y). In this specification, it is represents by the structure of the following general formula (X).

Although the trimethine cyanine cation may have optical isomers, such as enantiomers, diastereomers, or racemates, in which the asymmetric carbon atoms to which the groups represented by R¹³ and R¹⁴, as well as R¹⁵ and R¹⁶, are respectively bonded serve as chiral centers, any optical isomer out of these may be used after being isolated or alternatively they may be used in the form of a mixture thereof. 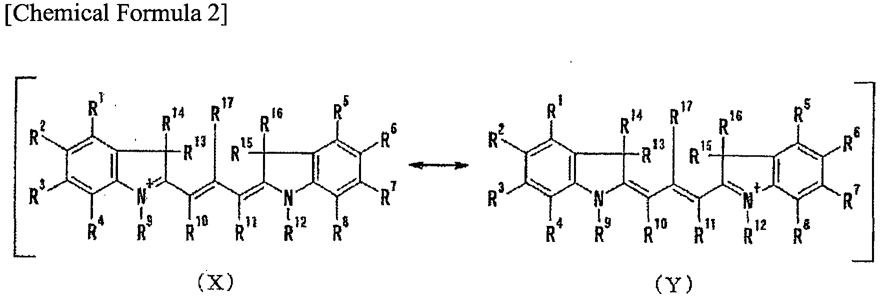 wherein in the above-mentioned formulas, R¹ to R¹⁷ are the same groups as R¹ to R¹⁷ in the above-mentioned general formula (1).

The above-mentioned trimethine cyanine cation in which R¹ through R¹² are each a hydrogen atom, a halogen atom, a nitro group, -NRR' (R and R' are each an optionally substituted aryl group having 6 to 20 carbon atoms (especially, 6 to 10 carbon atoms)), or an optionally substituted (especially substituted with a halogen atom) alkyl group having 1 to 20 carbon atoms (especially 1 to 5 carbon atoms) (the methylene group in the alkyl group may be interrupted by -O-, -S-, -SO₂ -CO-, -OCO-, or -COO-) is preferable because it has high fluorescent intensity, and more preferably, R¹ through R¹² are each a hydrogen atom, a halogen atom, a nitro group, an optionally substituted (especially, substituted with a halogen atom) alkyl group having 1 to 5 carbon atoms, or an optionally substituted arylalkyl group having 7 to 20 carbon atoms (especially 6 to 10 carbon atoms). Trimethine cyanine cations in which R² or R⁶ is a nitro group or a trifluoromethyl group are particularly preferable because they are easy to produce.

Specific examples of the above-mentioned trimethine cyanine cation include the following cations No. 1 through No. 64, but the trimethine cyanine cation is not restricted to these cations.

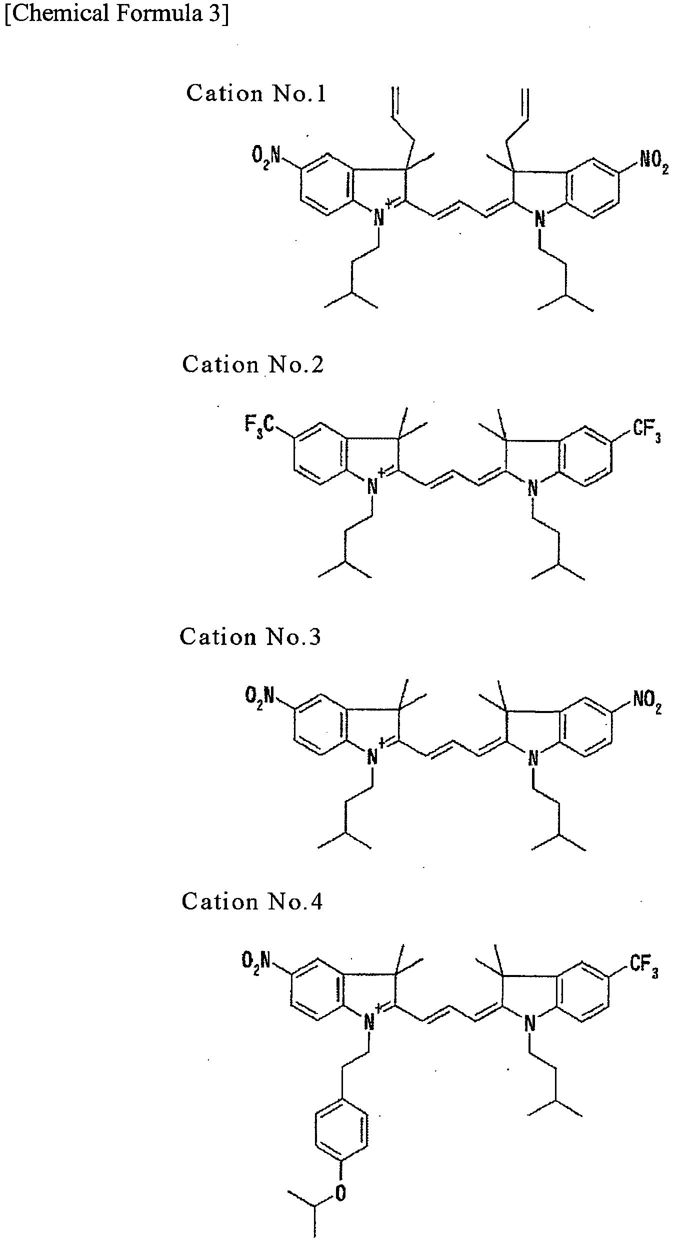

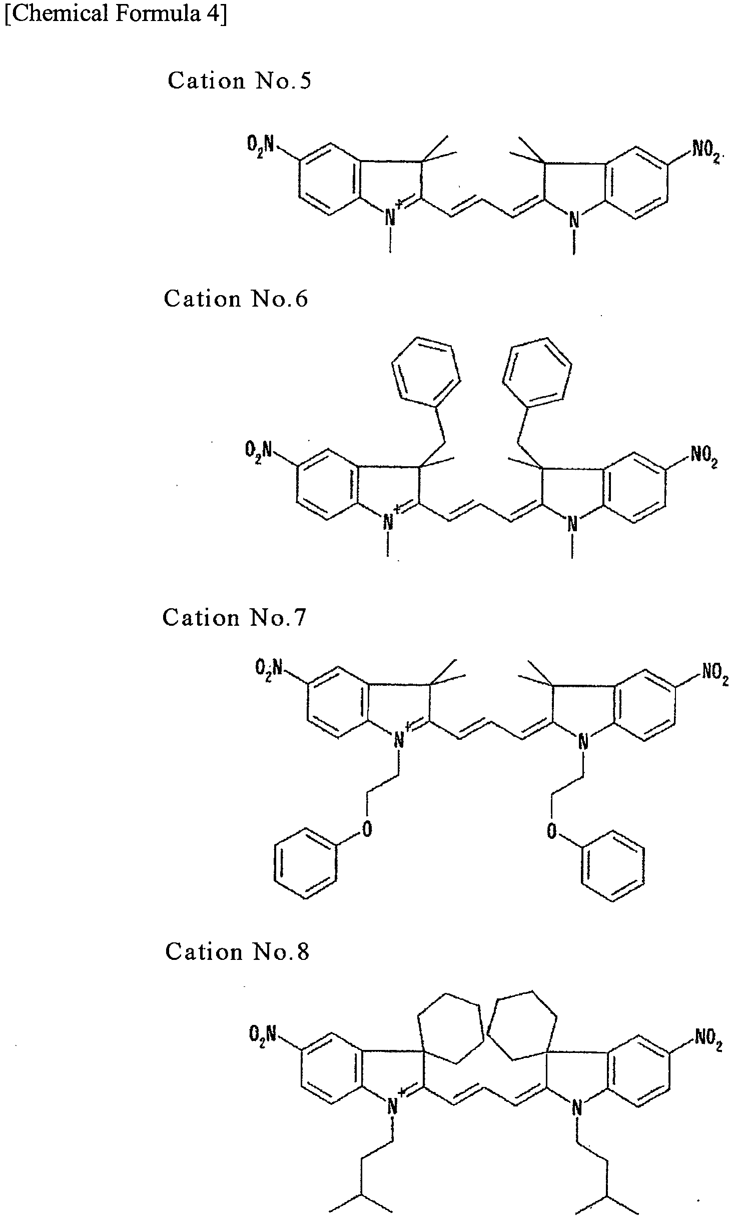

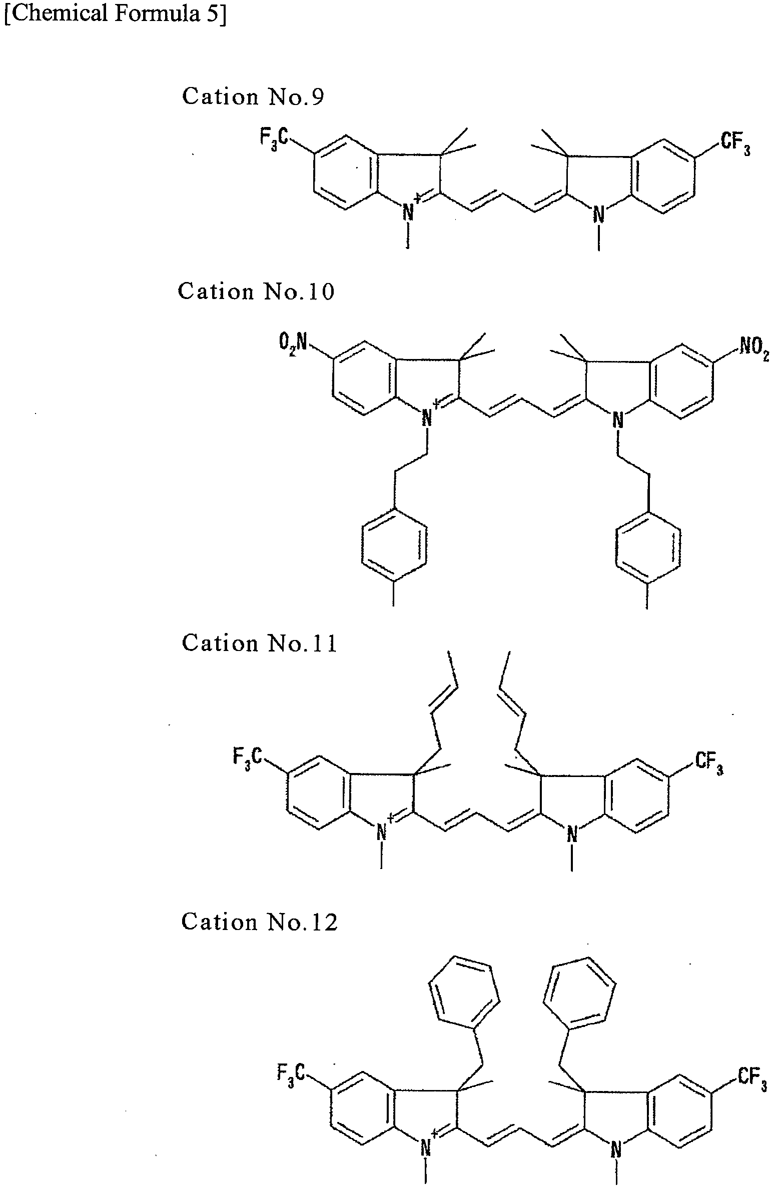

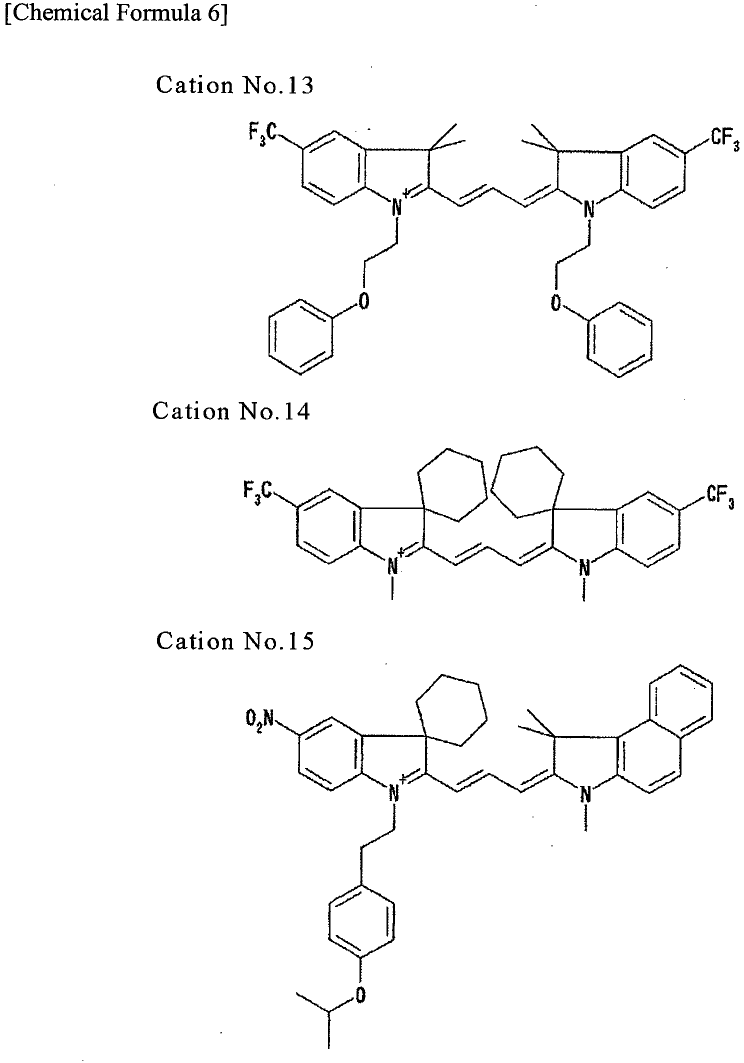

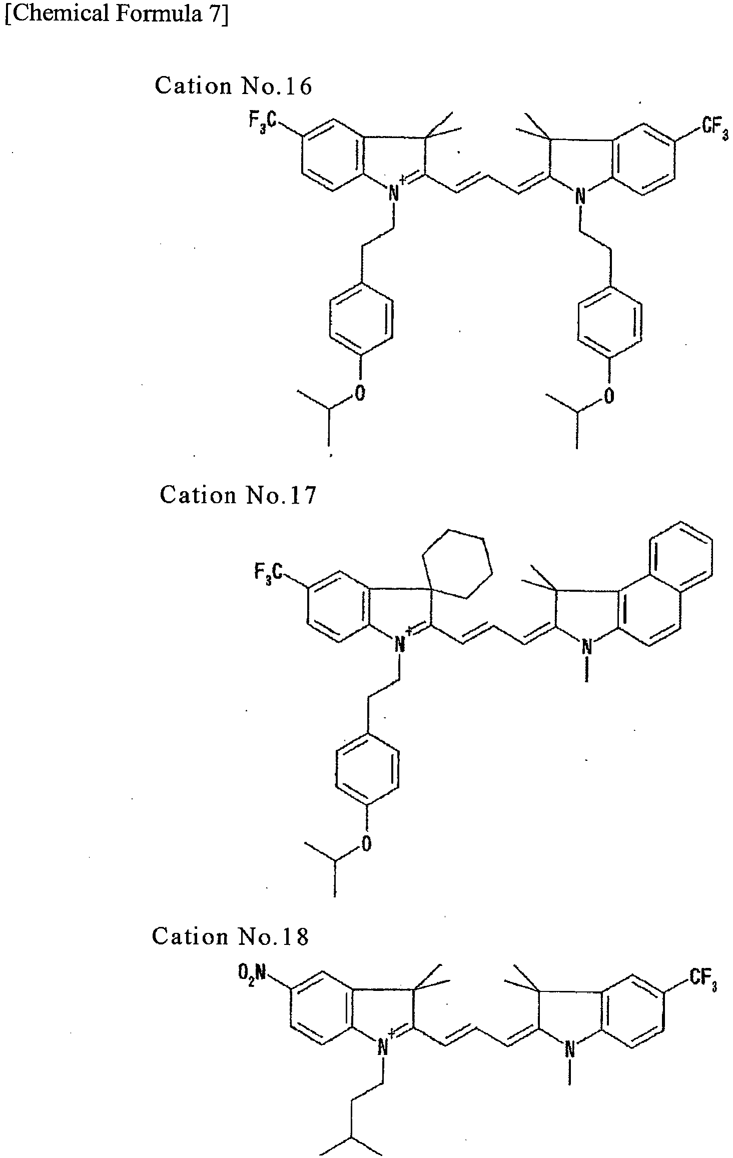

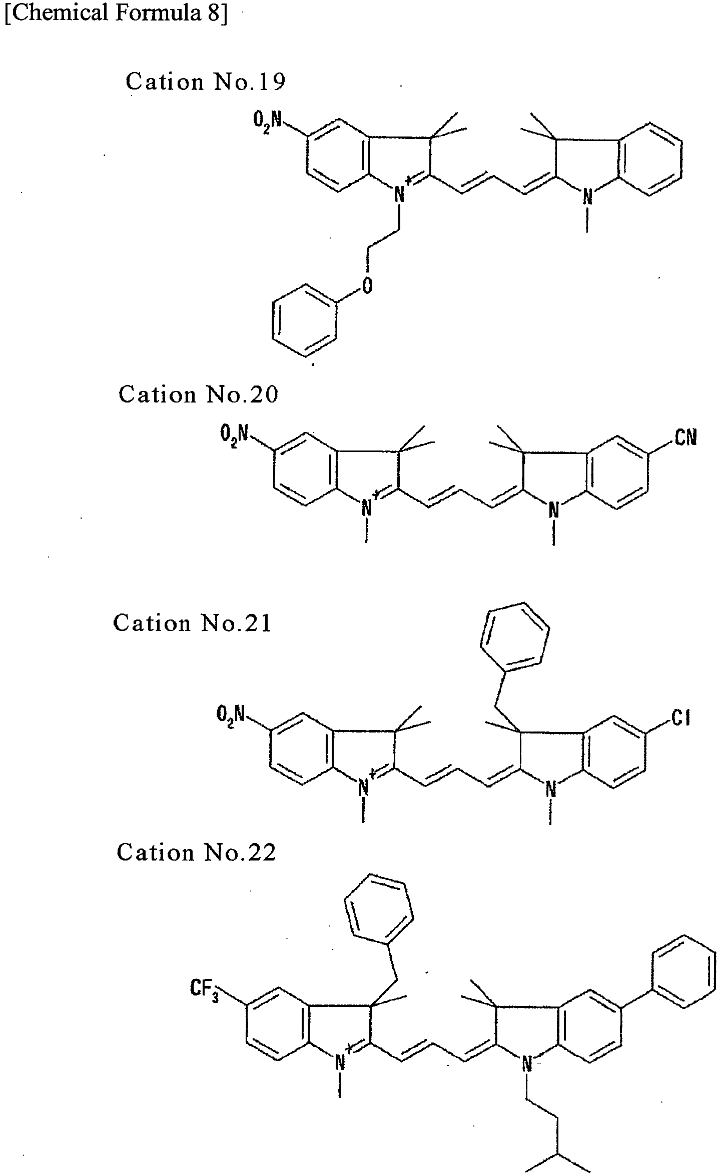

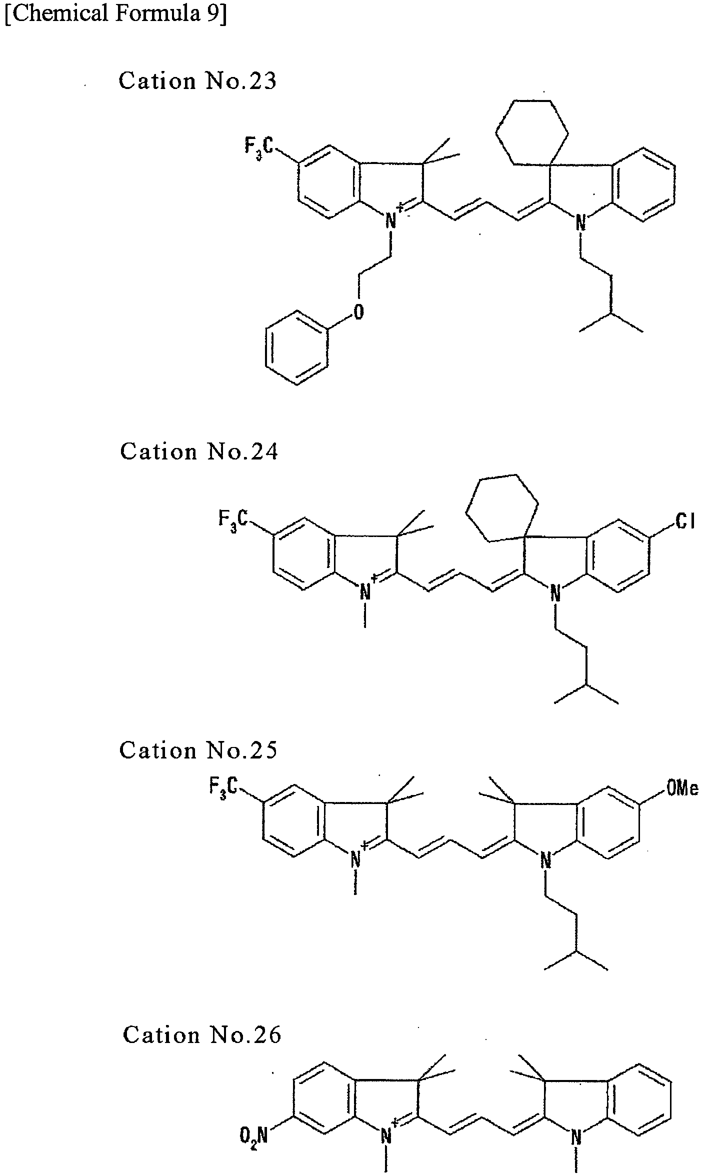

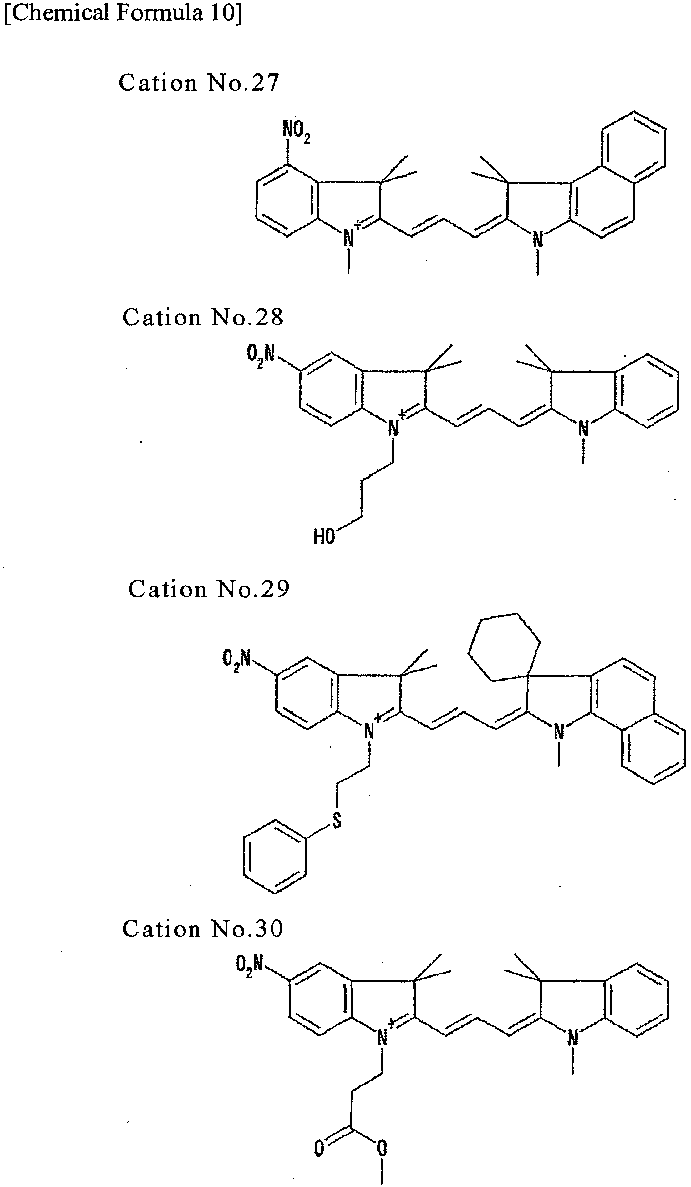

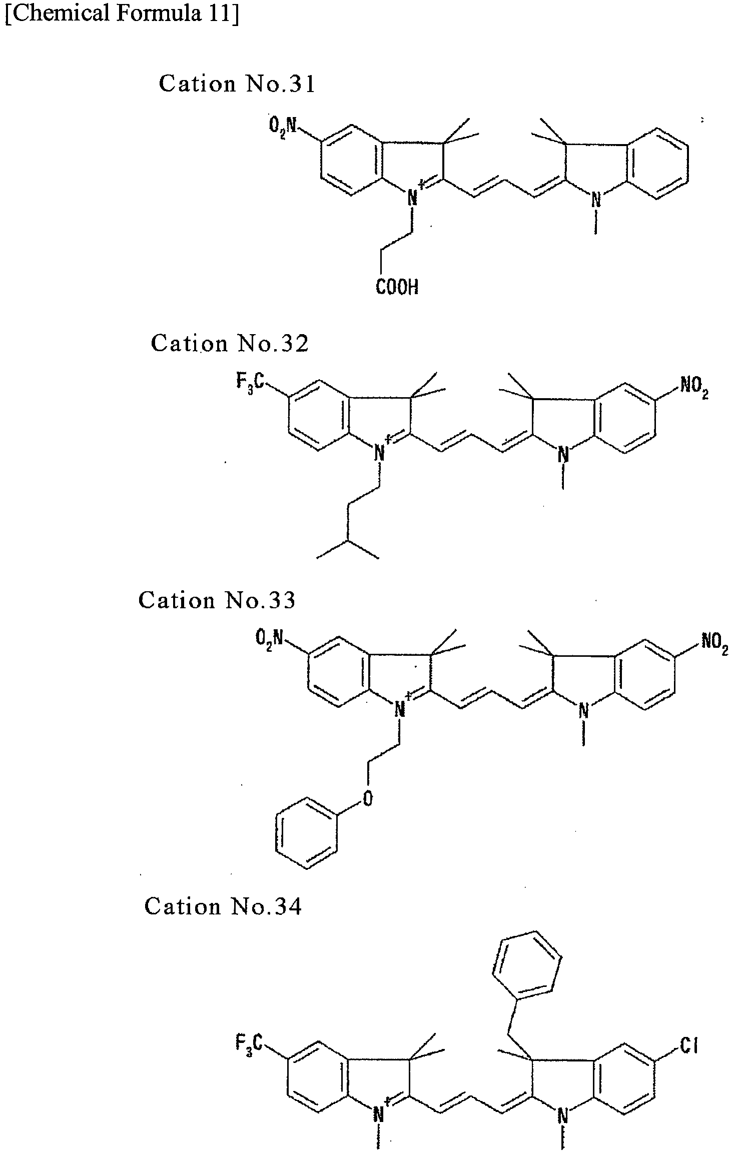

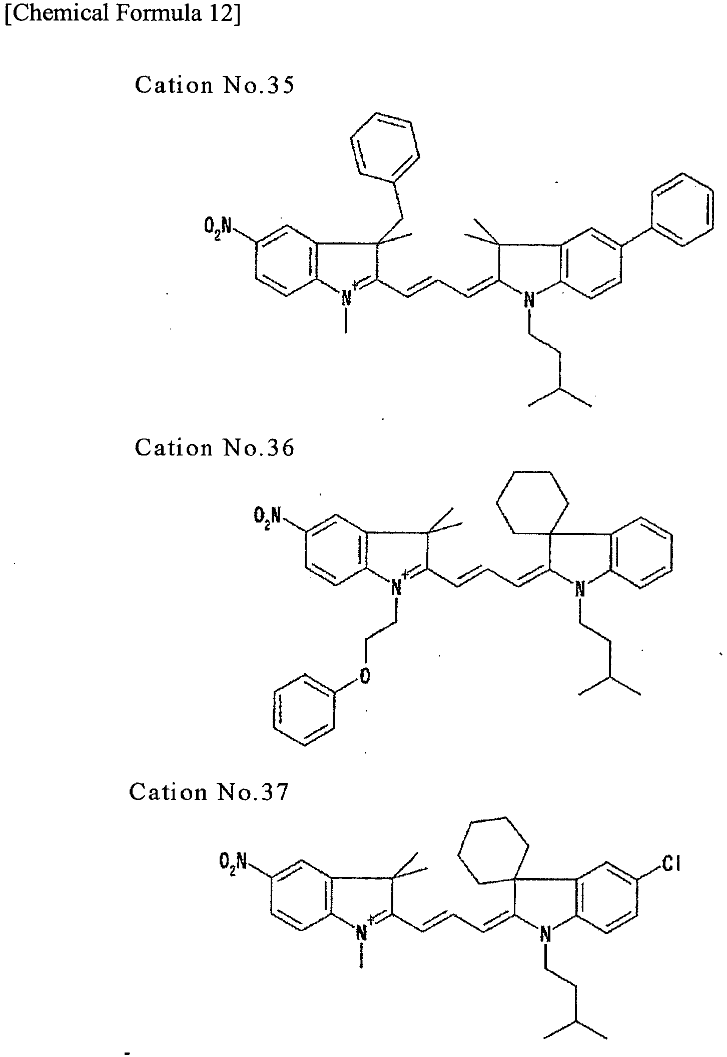

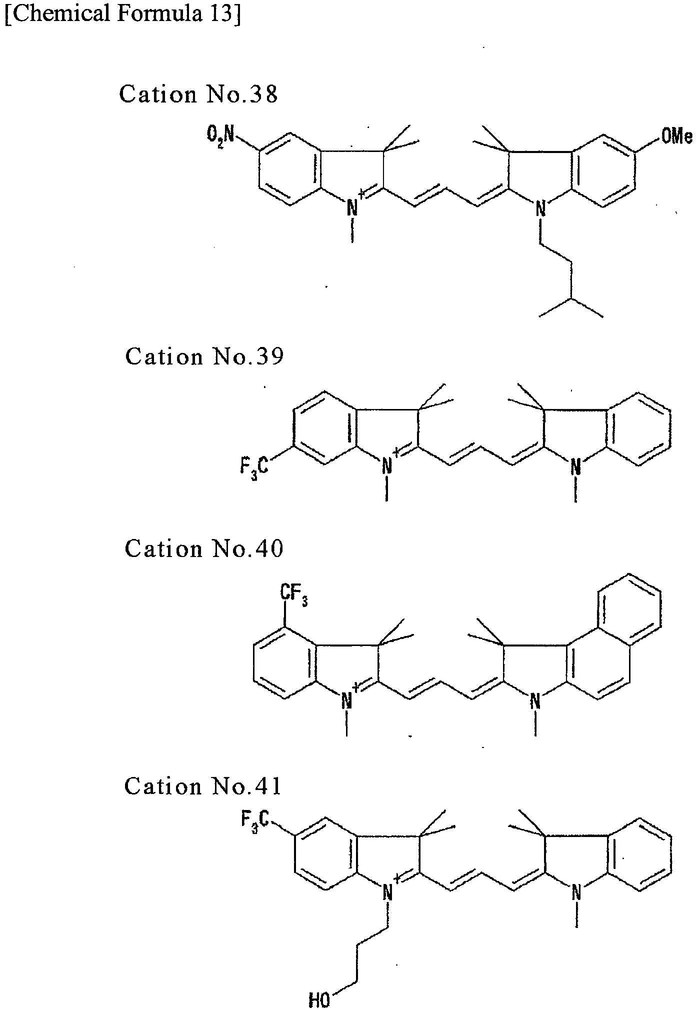

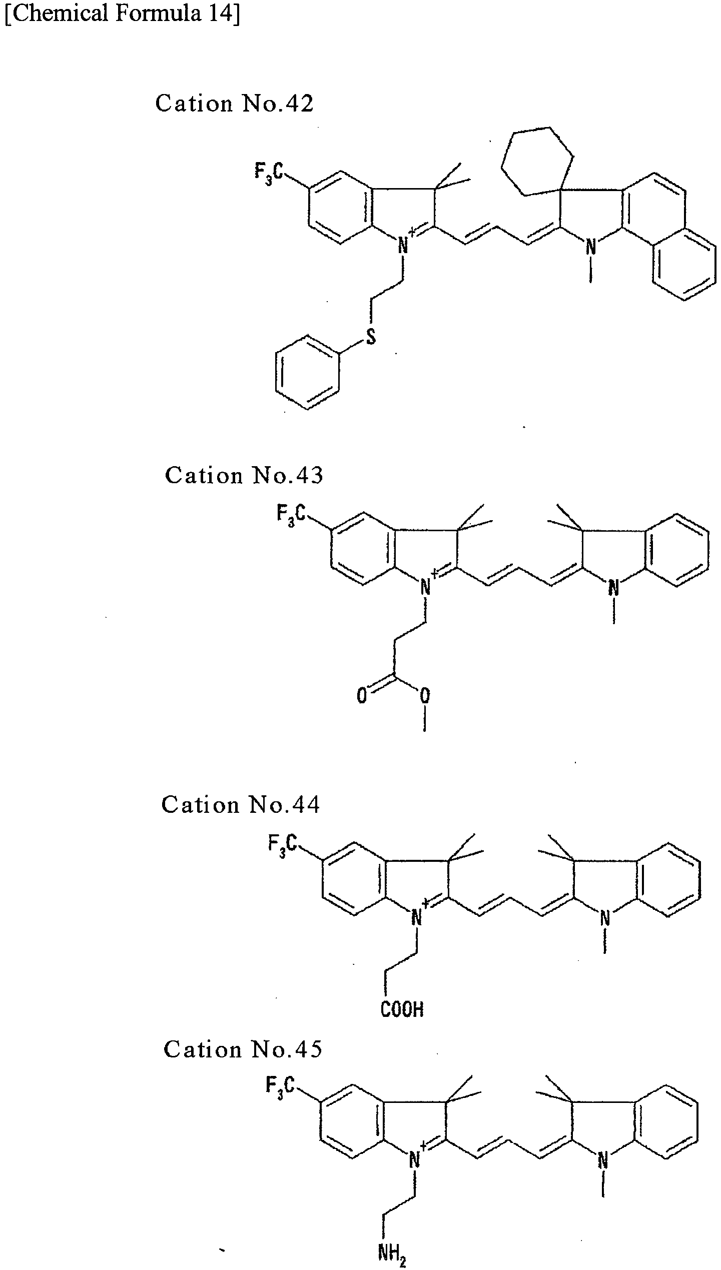

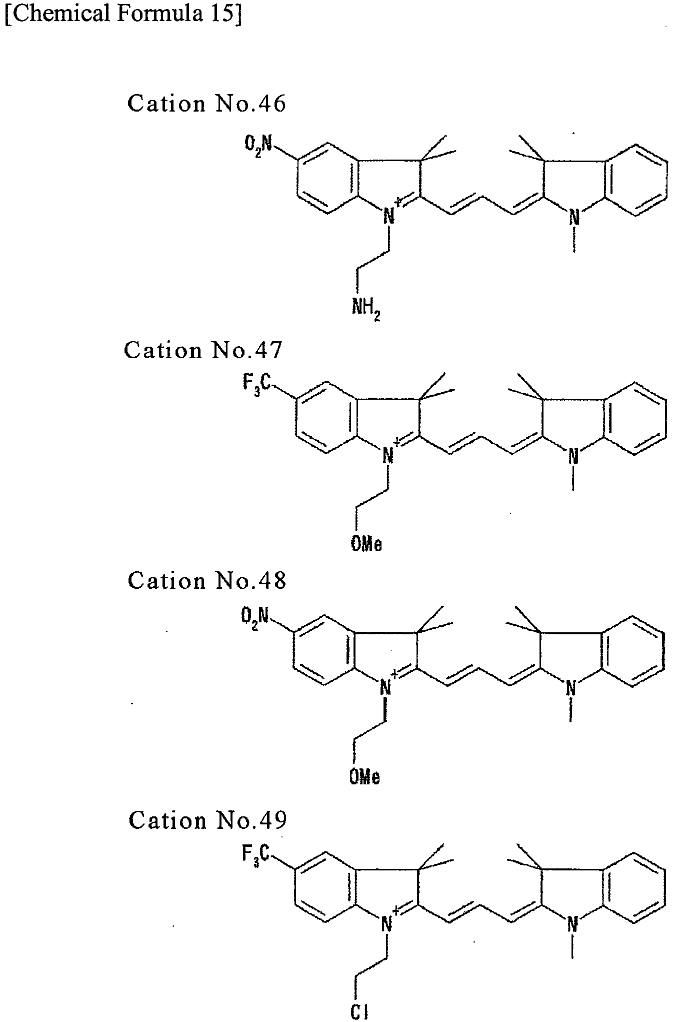

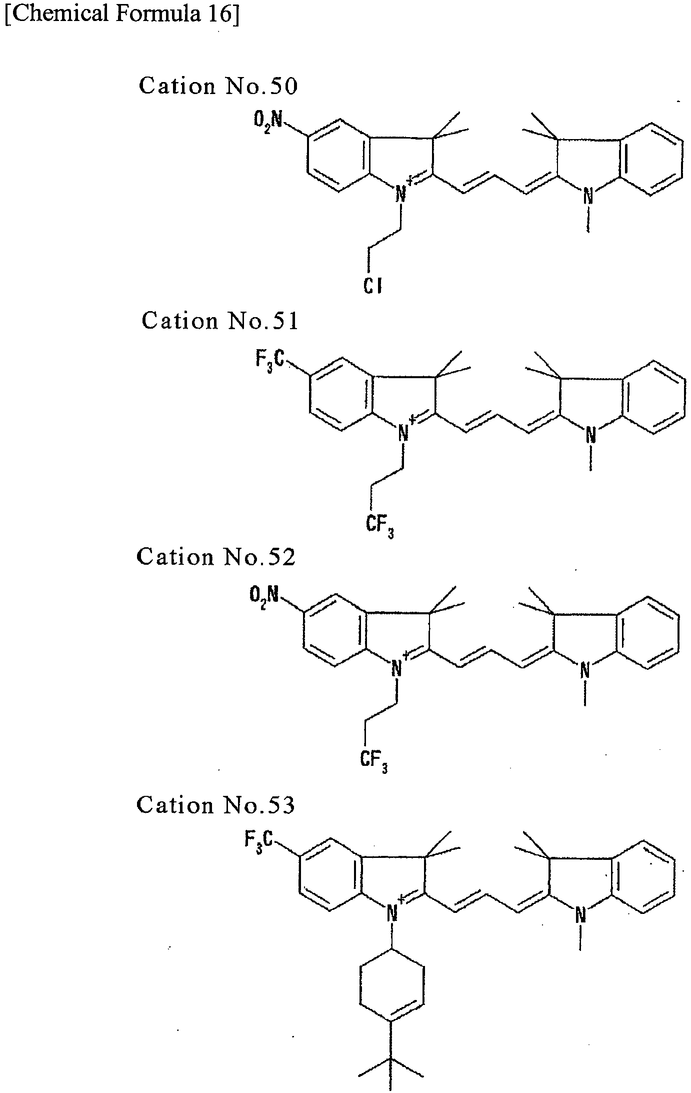

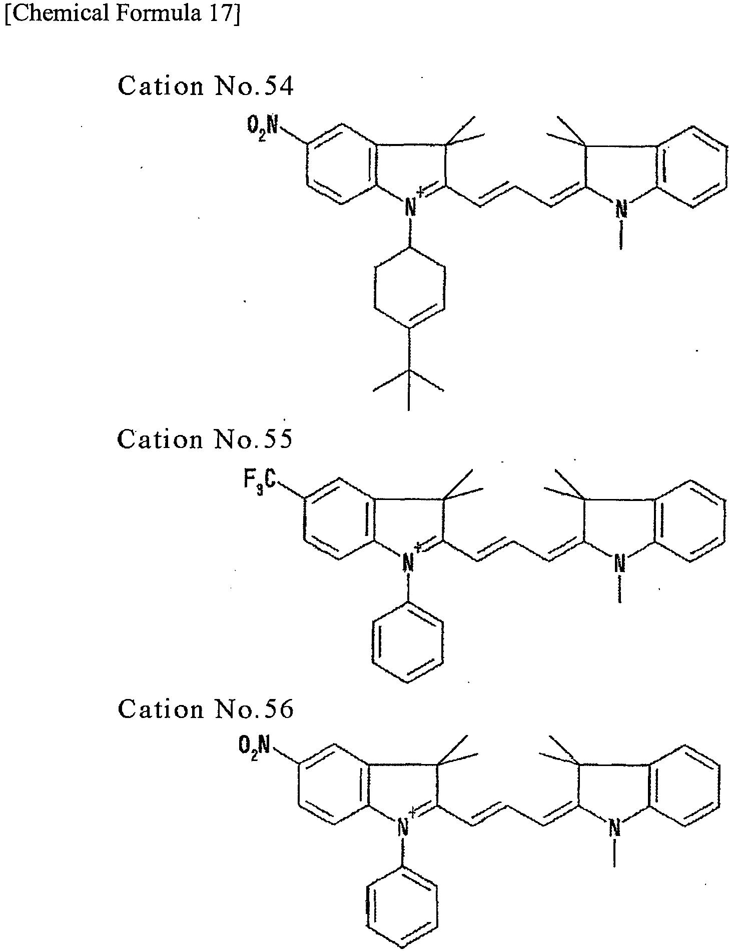

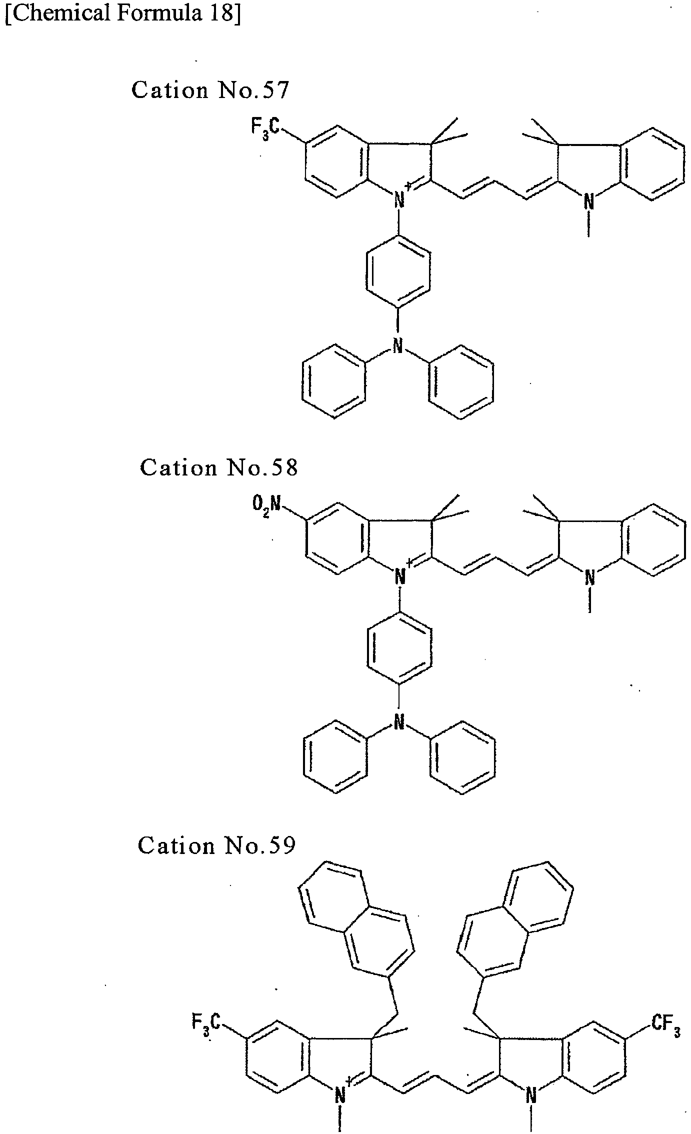

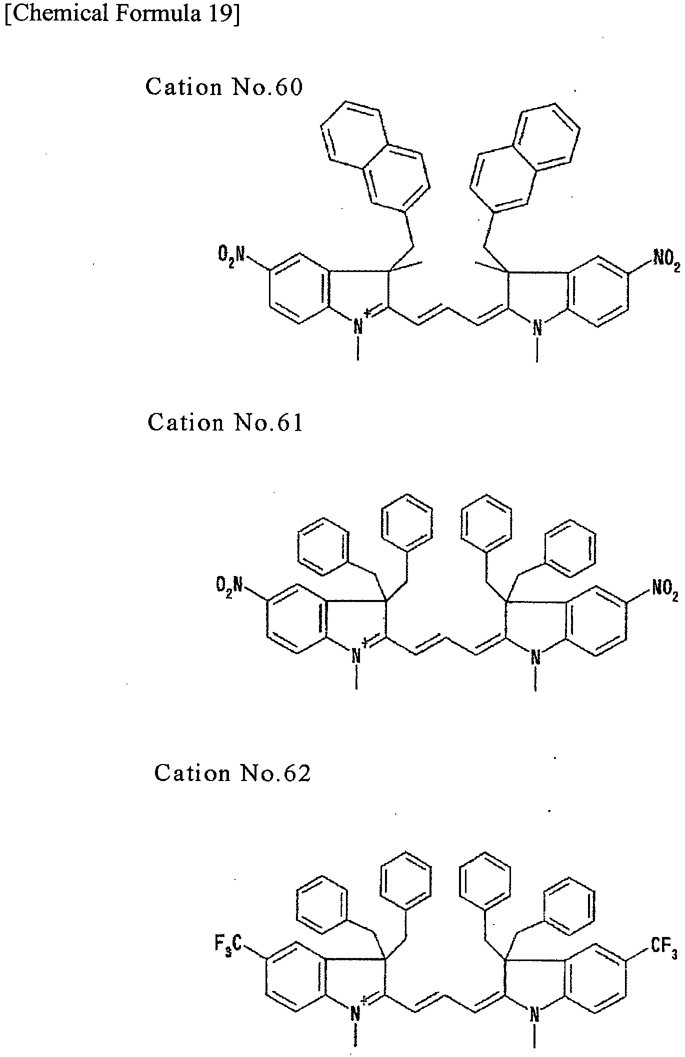

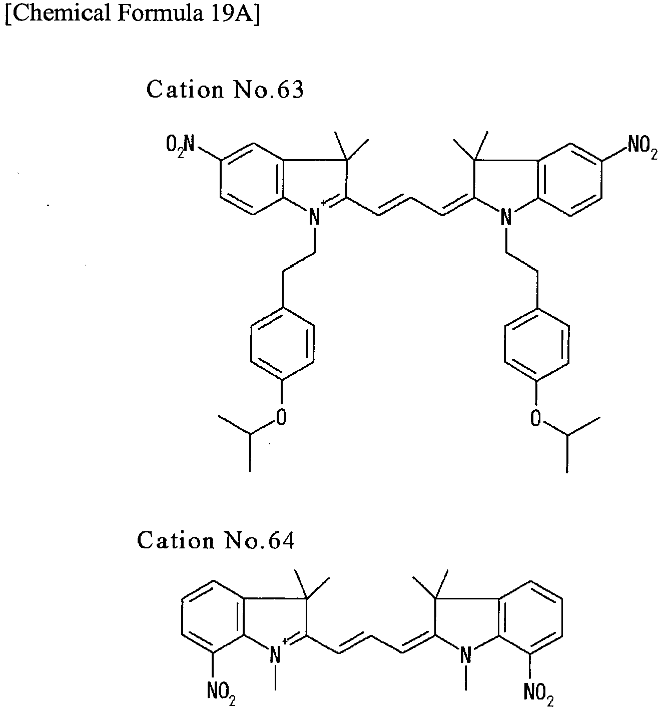

Examples of an anion represented by An^{m-} in the general formula (I) include monovalent anions such as halogen anions such as chloride anion, bromine anion, iodine anion, and fluorine anion; inorganic anions such as perchloric acid anion, chloric acid anion, thiocyanic acid anion, hexafluorophosphoric acid anion, hexafluoroantimony anion, tetrafluoroboron anion; organic sulfonic acid anions such as benzenesulfonic acid anion, toluenesulfonic acid anion, trifluoromethanesulfonic acid anion, diphenylamine-4-sulfonic acid anion, 2-amino-4-methyl-5-chlorobenzenesulfonic acid anion, 2-amino-5-nitrobenzene sulfonic acid anion, and the sulfonic acid anions disclosed in JP 8-253705 A, JP 2004-503379 W, JP 2005-336150 A, WO 2006/28006, and so on; organic phosphoric acid based anions such as octylphosphoric acid anion, dodecylphosphoric acid anion, octadecylphosphoric acid anion, phenylphosphoric acid anion, nonylphenylphosphoric acid anion, and 2,2'-methylenebis(4,6-di-tertiarybutylphenyl)phosphonic acid anion; bis(trifluoromethane sulfonyl)imidic acid anion, bisperfluorobutanesulfonylimide anion, perfluoro-4-ethylcyclohexane sulfonate anion, tetrakis(pentafluorophenyl)boric acid anion, tris(fluoroalkylsulfonyl)carbanion, and dibenzoyltartaric acid anion; and divalent anions such as benzenedisulfonic acid anion and naphthalenedisulfonic acid anion. Quencher anions having a function of de-exciting (quenching) an activated molecule in an excited state and quencher anions that are metal complex compounds having an anionic group such as a carboxyl group or a phosphonic acid group, and a sulfonic acid group on a cyclopentadienyl ring, such as ferrocene and ruthenocene, also may be used as required unless the wavelength conversion function is impaired.

Examples of the quencher anion include those represented by the following general formula (1) or (2) and those represented by the following formula (3), (4), (5), (6), (7), (8), (9), (10), (11), or (12), and anions such as those disclosed in JP 60-234892 A, JP 5-43814 A, JP 5-305770 A, JP 6-239028 A, JP 9-309886 A, JP 9-323478 A, JP 10-45767 A, JP 11-208118 A, JP 2000-168237 A, JP 2002-201373 A, JP 2002-206061 A, JP 2005-297407 A, JP 7-96334 B, WO 98/29257 pamphlet are also mentioned. 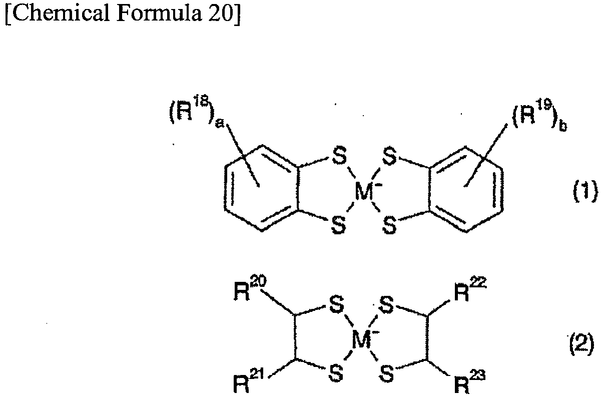 wherein M represents Fe, Co, Ni, Ti, Cu, Zn, Zr, Cr, Mo, Os, Mn, Ru, Sn, Pd, Rh, Pt, or Ir, R¹⁸ and R¹⁹ each independently represent a halogen atom, an alkyl group having 1 to 8 carbon atoms, an aryl group having 6 to 30 carbon atoms, or a -SO₂-G group, G represents an alkyl group, an aryl group that is optionally substituted with a halogen atom, a dialkylamino group, a diarylamino group, a piperidino group, or a morpholino group, and a and b each independently represent an integer of 0 to 4; R²⁰, R²¹, R²², and R²³ each independently represent an alkyl group, an alkylphenyl group, an alkoxyphenyl group, or a halogenated phenyl group.

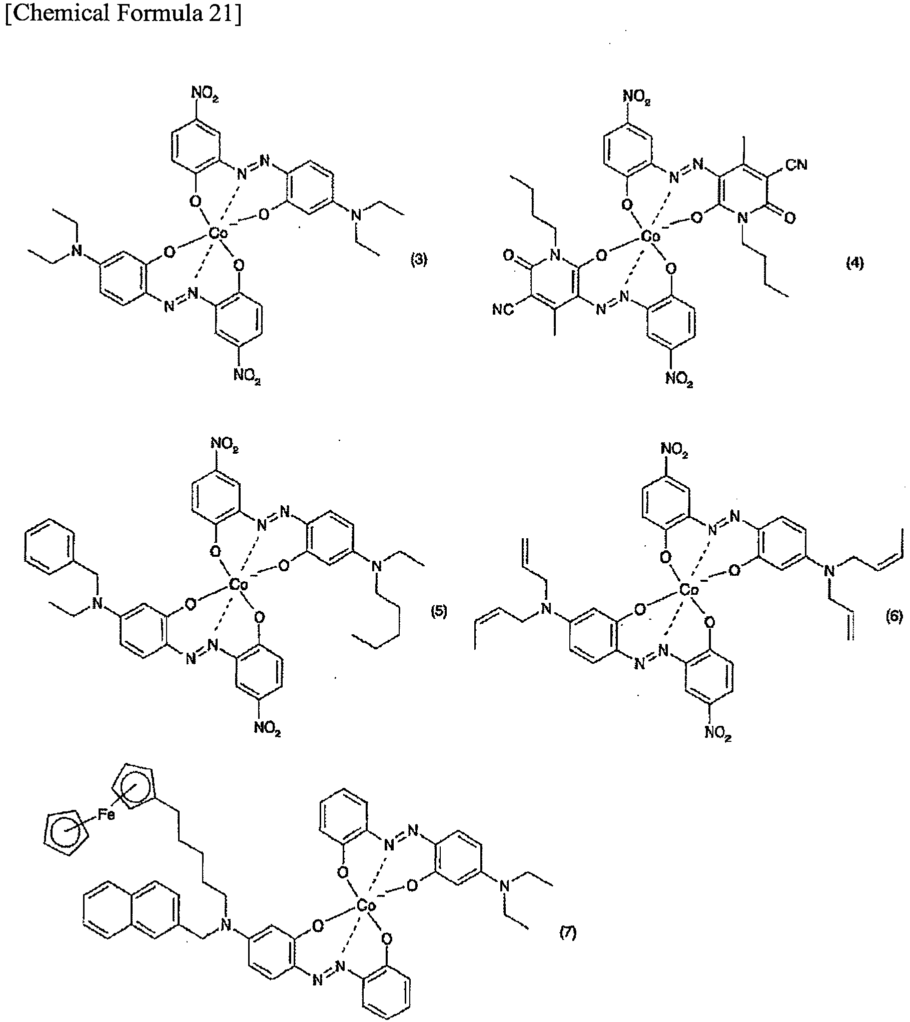

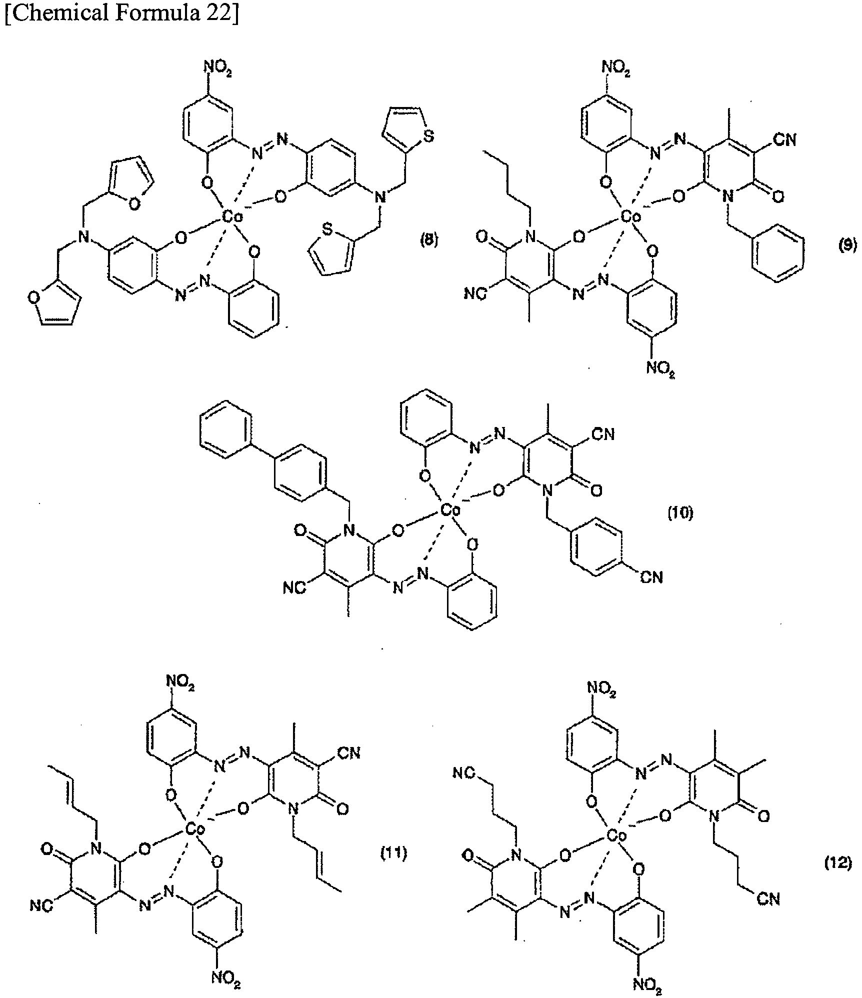

In terms of productivity, solubility, and durability, halogen anions, hexafluorophosphate anion, tetrafluoroborate anion, perchlorate anion, and bis(trifluoromethanesulfonyl)imidate anion are preferable as the anion represented by An^{m-} in the general formula (I).

The trimethine cyanine compound (C) represented by the general formula (I) is a salt of the above-described trimethine cyanine cation with an anion represented by An^{m-} and can be produced according to conventionally well-known methods. The trimethine cyanine cation and the anion represented by An^{m-} provided above as an example may be combined arbitrarily in the form to keep a charge neutral.

In the light-diffusing resin composition of the present invention, the trimethine cyanine compound (C) represented by the general formula (I) may be used either singly or in a combination of two or more species thereof.

In the light-diffusing resin composition of the present invention, the content of the binder resin (A) is preferably 1 to 80% by mass and more preferably 20 to 70% by mass. If the content of the binder resin (A) is less than 1% by mass, then the adhesion between diffusing particles or with a substrate may decrease, whereas if the content exceeds 80% by mass, then the light-diffusing property may deteriorate.

The content of the light-diffusing agent (B) is preferably 15 to 95% by mass, and more preferably 29 to 79% by mass. If the content of the light-diffusing agent (B) is less than 15% by mass, then sufficient light diffusing property may fail to be obtained, whereas if the content exceeds 95% by mass, then a total light transmittance may decrease.

The content of the trimethine cyanine compound (C) represented by the general formula (I) is preferably 0.0001 to 5% by mass, and more preferably 0.001 to 1% by mass. If the content of the trimethine cyanine compound (C) represented by the general formula (I) is less than 0.0001% by mass, then the effect of wavelength conversion to a red color may decrease, whereas if the content exceeds 5% by mass, brightness may decrease greatly.

For the light-diffusing resin composition of the present invention, colorants other than the trimethine cyanine compound (C) represented by the general formula (I) (other colorants) may be used as long as the effect of the present invention is not impaired. The colorant which can be used is not restricted, and examples thereof include cyanine colorants, pyridine colorants, oxazine colorants, coumarin colorants, coumarin dyes, naphthalimide colorants, pyromethene colorants, perylene colorants, pyrene colorants, anthracene colorants, styryl colorants, rhodamine colorants, azo colorants, quinone colorants, squarylium colorants, diketopyrrolopyrrole colorants, iridium complex colorants, europium colorants, porphyrin colorants, azaporphyrin colorants, and naphtholactam colorants.

A solvent may be used for the light-diffusing resin composition of the present invention. The solvent is not particularly restricted and examples thereof include water, alcohol solvents, diol solvents, ketone solvents, ester solvents, ether solvents, aliphatic or alicyclic hydrocarbon solvents, aromatic hydrocarbon solvents, cyano group-containing hydrocarbon solvents, and halogenated aromatic hydrocarbon solvents. Of these solvents, ketone solvents and aromatic hydrocarbon solvents are preferred because of their superior coatability. Regarding the usage amount of the solvent, the solvent is preferably used so that the combined amount of the above-mentioned (A) to (C) may become 10 to 99% by mass.

For the light-diffusing resin composition of the present invention, various additives such as a thermal polymerization initiator, a light stabilizer, an infrared absorbing agent, a ultraviolet absorber, an antioxidant, a surfactant, an antistatic agent, a flame retardant, a lubricant, a heavy metal deactivator, a clarifier, a nucleating agent, a crystallizing agent, and a compatibilizer may be used as required in addition to the above-mentioned photopolymerization initiator, the crosslinking agent, and other colorants. In the present invention, the contents of the additives are preferably adjusted to 20% by mass or less in total.

The method for producing (method for formulating) the light-diffusing resin composition of the present invention is not particularly restricted, and the composition can be obtained by a conventionally known mixing and kneading method. For example, in the case of failing to use the above-described solvent, there can be mentioned a method in which the respective ingredients described above a mixed by using a conventional mixer such as a Henschel mixer, a tumbler, and a ribbon blender, followed by melt-kneading. In the case of using the above-described solvent, there can be mentioned a method in which a binder resin (A) is heated as required and then respective ingredients are dissolved or dispersed in a solvent (with the proviso that a light-diffusing agent (B) fails to dissolve) and a method in which a mixture prepared by melt-kneading respective ingredients with using no solvent and then dissolving the mixture in a solvent. Regardless of whether a solvent is used or not, there are no particular limitations with respect to the order of compounding respective ingredients.

Since the light-diffusing resin composition of the present invention has the property of converting incident light into diffused light with suitable brightness and color purity and then emitting it, the composition can be used in the form of a light-diffusing board as well as in the form of a light-diffusing sheet described below. In the event that the binder resin (A) is a thermoplastic resin, the light-diffusing board can be produced by molding a composition in a molten state by a conventional technique such as injection molding, blow molding, extrusion forming, and compression molding. In the event that the binder resin (A) is the thermosetting resin, the light-diffusing board can be produced by curing a composition in a mold.

In the event that the binder resin (A) is the photocurable resin and/or the thermosetting resin, the light-diffusing board can be produced by mixing these resins with the photopolymerization initiator and/or the crosslinking agent, and then curing the resins by photoirradiation and/or heating treatment.

When the light-diffusing resin composition of the present invention is used for the light-diffusing board, it is preferable to fail to use the above-described solvent because coatability is not required.

Next, the light-diffusing sheet of the present invention will be described. It is noted that descriptions made for the light-diffusing resin composition of the present invention will be applied appropriately for parts to which no particular description is made.

The light-diffusing sheet of the present invention has the transparent substrate layer and the light-diffusing layer formed on at least one side of the substrate layer, the light-diffusing layer being made of the light-diffusing resin composition of the present invention.

As the transparent substrate layer to be used for the light-diffusing sheet of the present invention, there can be used, for example, an inorganic material such as glass or a synthetic polymeric material, such as polyethylene terephthalate, polymethyl methacrylate, polyvinyl butyral, polyvinylpyrrolidone, polyvinyl alcohol, polyvinyl chloride, styrene-butadiene copolymers, polystyrene, polycarbonate, polyamide, ethylene-vinyl acetate copolymer resins, epoxy resins, polyfluorene resins, and silicone resins.

The transparent substrate layer may be formed of either a single material or two or more materials and also may be composed of either a single layer or a plurality of layers.

The thickness of the transparent substrate layer is preferably within the range of 10 to 10000 µm, and more preferably within the range of 30 to 500 µm.

If the thickness of the transparent substrate layer is less than 10 µm, the mechanical strength of the light-diffusing sheet may decrease. If the thickness of the transparent substrate layer exceeds 10000 µm, then the quantity of light which passes through the transparent substrate layer may decrease and brightness may deteriorate.

The transparent substrate layer mentioned above preferably has a visible light transmittance of 80% or more, more preferably has a transmittance of 86% or more. The haze of the transparent substrate layer is preferably 2% or less, and more preferably 1% or less. The index of refraction of the transparent substrate layer is preferably 1.45 to 1.70.

The transparent substrate layer may be subjected to various types of surface treatment. Examples of the surface treatment include chemical treatment, mechanical treatment, corona discharge treatment, flame treatment, UV irradiation treatment, high frequency treatment, glow discharge treatment, active plasma treatment, laser treatment, mixed acid treatment, and ozone oxidation treatment.

The diffusing layer is made of the light-diffusing resin composition of the present invention and it is formed on at least one side of the transparent substrate layer.

The method of forming the light-diffusing layer on at least one side of the transparent substrate layer is not particularly restricted, and examples thereof include dip coating, air knife coating, curtain coating, roller coating, wire bar coating, gravure coating, spin coating, and extrusion coating. The form of the light-diffusing resin composition to be used is preferably one using the above-described solvent because this form is superior in coatability and productivity.

The thickness of the light-diffusing layer is preferably chosen from the range of 0.1 to 500 µm, and more preferably chosen from the range of 10 to 100 µm.

If the thickness of the light-diffusing layer is less than 0.1 µm, then light incident into the light-diffusing layer may not be diffused sufficiently. If the thickness of the light-diffusing layer exceeds 100 µm, then the quantity of light which passes through the light-diffusing layer may decrease and brightness may decrease.

The light-diffusing layer may be formed of either a single material or two or more materials and also may be composed of either a single layer or a plurality of layers.

Next, the light source unit of the present invention will be described with reference to drawings. It is noted that descriptions made for the light-diffusing resin composition and the light-diffusing sheet of the present invention will be applied appropriately for parts to which no particular description is made.

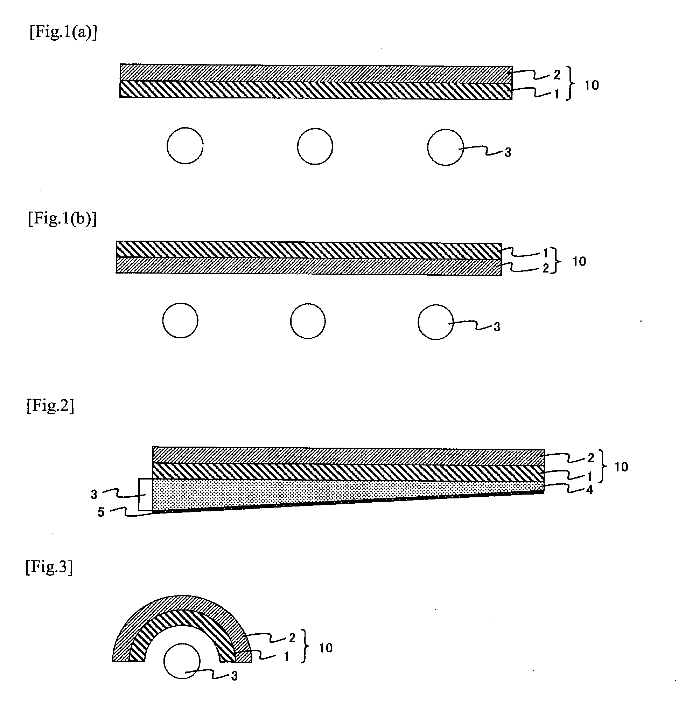

The light source unit of the present invention has a light-diffusing sheet 10 of the present invention and a light source 3. One example of a direct-lit light source unit is the form depicted in Fig. 1(a). In the light source unit of Fig. 1(a), the light source 3 is provided on a side of the light-diffusing sheet 10 where the transparent substrate layer 1 is located. The light source 3 may be provided on a side of the light-diffusing sheet 10 where a light-diffusing layer 2 is located as depicted in Fig. 1(b).

The light source unit of the present invention should just have a function that light emitted from the light source 3 is emitted as diffused light through the substrate layer 1 and the light-diffusing layer 2 and may have an optically functional layer other than the light-diffusing layer 2, for example, a Fresnel lens layer.

While examples of the light source 3 include a light-emitting diode (LED), a cold-cathode tube, an EL, a xenon lamp, and a halogen lamp, the LED (especially, a white LED) is particularly preferable because the use of the light-diffusing sheet of the present invention makes the color purity of white highest.

In the case of using the LED as the light source 3 in the light source unit of the present invention, since the LED is dot luminescent, the form of the light source unit may be in an edge light system as depicted in Fig. 2 instead of the direct-lit system depicted in Fig. 1(a) or (b) in the case of taking light as a plane luminescence.

In the light source unit of Fig. 2, light emitted from a light source 3 and having passed a light guide plate 4 is reflected by a reflecting plate 5 and thereby is uniformly supplied into the plane of the light-diffusing sheet 10.

For the light guide plate 4 there can be used such materials as acrylic, polycarbonate, polyester, polyethylene terephthalate, and polybutylene terephthalate.

The thickness of the light guide plate 4 is preferably chosen from the range of 0.1 to 100 mm, and more preferably chosen from the range of 0.5 to 50 mm.

For the reflecting plate 5 there can be used such materials containing an air layer or white fine particles as acrylic, polycarbonate, polyester, polyethylene terephthalate, and polybutylene terephthalate.

The thickness of the reflecting plate 5 is preferably chosen from the range of 10 to 10000 µm, and more preferably chosen from the range of 50 to 5000 µm.

The light source unit of the present invention is used suitably for a back light unit for a display, lighting fixtures for a residence and a vehicle, and so on. As an illumination application, the embodiment depicted in Fig. 3 is also used suitably besides the embodiments depicted in Fig. 1(a), Fig. 1(b), and Fig. 2.

### EXAMPLES

The present invention is described below in more detail with reference to Examples and Comparative Examples. However, the present invention is not limited by the following Examples.

### [Examples 1 to 5 and Comparative Examples 1 to 6]

According to the compounding ratios given in the following [Table 1], a light-diffusing resin compositions of Examples 1 to 5 and Comparative Examples 1 to 6 were prepared. As depicted in Fig. 1 (a), each of the light-diffusing resin composition was applied onto a transparent substrate layer 1 made of PET film (produced by PANAC Corporation, 100 µm in thickness) by using a No. 90 bar coater, and then heated and dried at 100°C for 10 minutes. Thus, light-diffusing sheets 10 of Examples 1 to 5 and Comparative Examples 1 to 6 each having a light-diffusing layer 2 made of the light-diffusing resin composition were prepared. The quantity of a dye to incorporate was adjusted so that the absorbance at a λmax (584 nm) when adding no light-diffusing agent might become a value given in [Table 1]. For each of the resulting light-diffusing sheets, a general color rendering index (Ra) of the radiation spectrum of diffused light was measured with a spectroradiometer (SR-LEDW, manufactured by TOPCON CORPORATION) by using a white LED as a light source 3 on the basis of JIS Z8726. The results are shown in [Table 2].

**[Table 1]**

| | Binder resin (A) | Light-diffusing agent (B) | Compound (C) of general formula (I) | Comparati ve colorant of compound (C) | Solvent | Absorbance |
|---|---|---|---|---|---|---|
| Example 1 | PMMA(100) | SX-350H(107) | ClO₄ salt of cation No.63 (0.016) | - | MEK(433) | 0.2 |
| Example 2 | PMMA(100) | SX-350H(107) | ClO₄ salt of cation No.63 (0.032) | - | MEK(433) | 0.4 |
| Example 3 | PMMA(100) | SX-350H(107) | ClO₄ salt of cation No.63 (0.048) | - | MEK(433) | 0.6 |
| Example 4 | PMMA(100) | SX-350H(107) | ClO₄ salt of cation No.63 (0.064) | - | MEK(433) | 0.8 |
| Example 5 | PMMA(100) | SX-350H(107) | ClO₄ salt of cation No.63 (0.080) | - | MEK(433) | 1 |
| Comparative Example 1 | PMMA(100) | SX-350H(107) | - | - | MEK(433) | - |
| Comparative Example 2 | PMMA(100) | SX-350H(107) | - | AP(0.050) | MEK(433) | 0.2 |
| Comparative Example 3 | PMMA(100) | SX-350H(107) | - | AP(0.099) | MEK(433) | 0.4 |
| Comparative Example 4 | PMMA(100) | SX-350H(107) | - | AP(0.149) | MEK(433) | 0.6 |
| Comparative Example 5 | PMMA(100) | SX-350H(107) | - | AP(0.198) | MEK(433) | 0.8 |
| Comparative Example 6 | PMMA(100) | SX-350H(107) | - | AP(0.247) | MEK(433) | 1 |

| | | | | | | |
|---|---|---|---|---|---|---|
| PMMA: polymethyl methacrylate resin SX-350H: produced by Soken Chemical Engineering Co., Ltd., crosslinked styrene particles, average particle diameter: 3.5 µm, index of refraction of D ray at room temperature: 1.59 AP: aza porphyrin compound 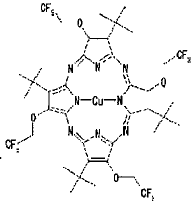 MEK: methyl ethyl ketone | | | | | | |

**[Table 2]**

| | General color rendering index (Ra) |
|---|---|
| Example 1 | 82 |
| Example 2 | 90 |
| Example 3 | 93 |
| Example 4 | 90 |
| Example 5 | 88 |
| Comparative Example 1 | 70 |
| Comparative Example 2 | 75 |
| Comparative Example 3 | 78 |
| Comparative Example 4 | 85 |
| Comparative Example 5 | 89 |
| Comparative Example 6 | 87 |

The results in [Table 2] clearly show that the light-diffusing sheets using light-diffusing resin compositions of the present invention containing as a colorant a trimethine cyanine compound (C) represented by the general formula (I) were improved in color rendering property with less colorant loadings as compared with the light-diffusing sheets using the light-diffusing resin compositions of the Comparative Examples containing an azaporphyrin compound, which is a comparative colorant.

### (Examples 6 to 9 and Comparative Examples 7 to 10)

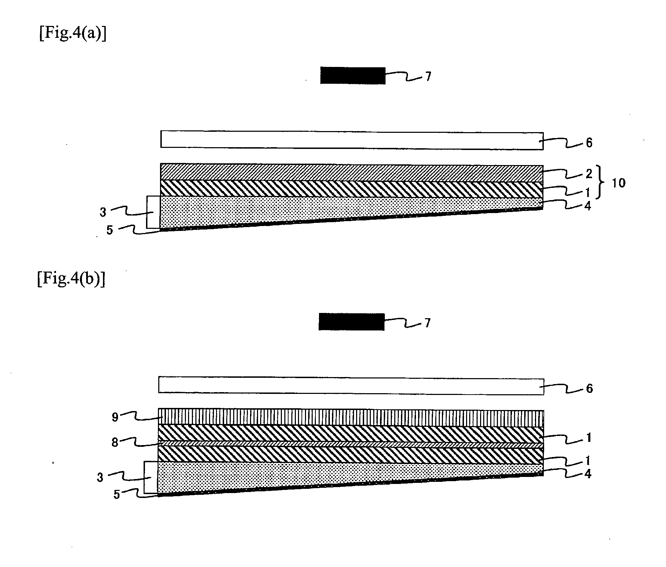

According to the compounding ratios given in the following [Table 3], a light-diffusing sheets 10 of Examples 6 to 9 and Comparative Examples 8 to 10 were prepared in the same manner as Example 1. Each of these light-diffusing sheets 10 and other members were arranged so as to form the configuration depicted in Fig. 4(a), and then the xy chromaticity and the radiance of the Red component of diffused light using a white LED as a light source 3 were measured.

Separately, the light-diffusing sheet of Comparative Example 7 was prepared in the same manner as Example 1 except for forming a light-diffusing agent layer 9 containing no colorant instead of the light-diffusing layer 2. This light-diffusing sheet and other members were arranged so as to form the configuration depicted in Fig. 4(b), and then the xy chromaticity and the radiance of the Red component of diffused light using the white LED as the light source 3 were measured.

The radiance was calculated as a relative value by taking Comparative Example 7 and Comparative Example 10 containing no colorant for each type of light-diffusing agent as 100. That is, the radiances of Example 6 and Comparative Examples 8 to 9 were expressed by relative values to the radiance of Comparative Example 7, and the radiances of Examples 7 to 9 were expressed by relative values to the radiance of Comparative Example 10. The results are shown in [Table 3].

**[Table 3]**

| | Binder resin (A) | Light-diffusing agent (B) | Compound (C) of general formula (I) | Comparative colorant of compound (C) | Solvent | Radiance of Red component | x | y |
|---|---|---|---|---|---|---|---|---|
| Example 6 | PMMA(100) | SX-350H(107) | ClO₄ salt of cation No.63 (0.080) | - | MEK(433) | 141 | 0.65 | 0.33 |
| Example 7 | PMMA(100) | MB30X-20(100) | ClO₄ salt of cation No.3 (0.0038) | - | MEK / toluene(425) | 128 | 0.65 | 0.34 |
| Example 8 | PMMA(100) | MB30X-20(100) | ClO₄ salt of cation No.63 (0.0050) | - | MEK / toluene(425) | 118 | 0.65 | 0.33 |
| Example 9 | PMMA(100) | MB30X-20(100) | ClO₄ salt of cation No.2 (0.0098) | - | MEK / toluene(425) | 136 | 0.64 | 0.35 |
| Comparative Example 7 | PMMA(100) | SX-350H(107) | - | - | MEK(433) | 100 | 0.63 | 0.35 |
| Comparative Example 8 | PMMA(100) | SX-350H(107) | - | AP(0.247) | MEK(433) | 89 | 0.64 | 0.34 |
| Comparative Example 9 | PMMA(100) | - | ClO₄ salt of cation No.63 (0.080) | - | MEK(433) | 113 | 0.65 | 0.33 |
| Comparative Example 10 | PMMA(100) | MB30X-20(100) | - | - | MEK / toluene(425) | 100 | 0.63 | 0.35 |

| | | | | | | | | |
|---|---|---|---|---|---|---|---|---|
| MB30X-20: produced by SEKISUI PLASTICS Co., Ltd., crosslinked polymethyl methacrylate particles, average particle diameter 20 µm, index of refraction 1.49 | | | | | | | | |

The results in [Table 3] clearly show that the trimethine cyanine compound (C) represented by the general formula (I) in the light-diffusing sheets of the present invention absorbed light of an unnecessary wavelength range and emitted fluorescent light of a desired (Red component) wavelength range and, as a result, the chromaticity and the radiance of Red component has been improved.

Moreover, the comparison of Example 6 with Comparative Example 7 and the comparison of Examples 7 to 9 with Comparative Example 10 clearly show that the trimethine cyanine compound (C) represented by the general formula (I) exerts a higher level of effect by its presence in the same layer as a light-diffusing agent is present.

### [Examples 11 to 13]

A light-diffusing resin compositions of Examples 10 to 12 with the addition of other colorants were produced according to the compounding ratios given in [Table 4], then, a light-diffusing sheets 10 of Examples 10 to 12 were prepared in the same manner as Example 1, and a xy chromaticity and a radiance of a Red component of diffused light using a white LED as a light source 3 were measured by the same method as Example 6. Regarding the radiance of Red component, relative values are given in [Table 4] while taking the radiance of Red component in Comparative Example 10 as 100.

**[Table 4]**

| | Binder resin (A) | Light-diffusing agent (B) | Compound (C) of general formula (I) | Other colorant | Solvent | Radiance of Red component | x | y |
|---|---|---|---|---|---|---|---|---|
| Example 10 | PMMA(100) | MB30X-20(100) | ClO₄ salt of cation No.3 (0.0038) | Lumogen F Yellow 038(0.015) | MEK / toluene(425) | 136 | 0.65 | 0.34 |
| Example 11 | PMMA(100) | MB30X-20(100) | ClO₄ salt of cation No.63 (0.0050) | Other colorant 1 (0.016) | MEK / toluene(425) | 123 | 0.65 | 0.34 |
| Example 12 | PMMA(100) | MB30X-20(100) | ClO₄ salt of cation No.63 (0.0050) | Other colorant 2 (0.028) | MEK / toluene(425) | 133 | 0.65 | 0.33 |

| | | | | | | | | |
|---|---|---|---|---|---|---|---|---|
| Lumogen F Yellow 038: produced by BASF A.G. Other colorant 1 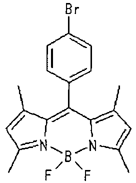 Other colorant 2 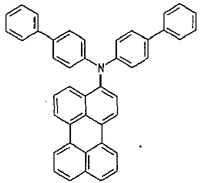 | | | | | | | | |

The radiance of Red component has been improved in Example 10 more than Example 7 using no other colorants, and similarly the radiance of Red component has been improved in Examples 11 and 12 more than Example 8 using no other colorants.

Therefore, light-diffusing sheets using light-diffusing resin compositions of the present invention are suitable for light source units because the sheets can improve color rendering properties and chromaticity and also can suppress decrease in brightness.

### REFERENCE SIGNS LIST

1 Transparent substrate layer
2 Light-diffusing layer
3 Light source
4 Light guide plate
5 Reflecting plate
6 Red color filter
7 Spectroradiometer
8 Layer of binder resin and fluorescent agent
9 Light-diffusing layer containing no colorant
10 Light-diffusing sheet

## Claims

1. A light-diffusing resin composition comprising a binder resin (A), a light-diffusing agent (B), and a trimethine cyanine compound (C) represented by the following general formula (I), 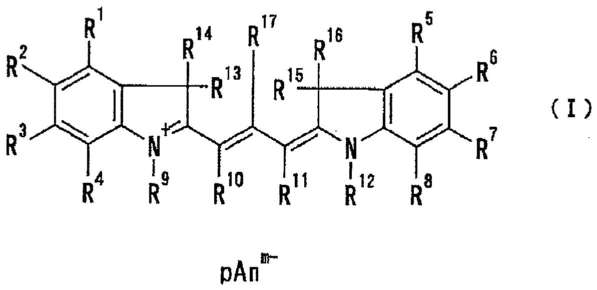 wherein R¹ through R¹⁷ each independently represent a hydrogen atom, a halogen atom, a nitro group, a cyano group, an aldehyde group, a carboxyl group, a hydroxy group, -NRR', an optionally substituted alkyl group having 1 to 20 carbon atoms, an optionally substituted aryl group having 6 to 20 carbon atoms, or an optionally substituted arylalkyl group having 7 to 20 carbon atoms, and R and R' each independently represent a hydrogen atom, an optionally substituted alkyl group having 1 to 20 carbon atoms, or an optionally substituted aryl group having 6 to 20 carbon atoms; methylene groups in the alkyl group and the arylalkyl groups and a junction between the aryl group and an indolenine ring or a trimethine chain may be interrupted by -O-, -S-, -SO₂ -CO-, -OCO-, or -COO-, hydrocarbon chains in the alkyl group and the arylalkyl group may have a double bond or a triple bond, and R¹³ and R¹⁴, R¹⁵ and R¹⁶, and adjacent groups out of R¹ to R⁴ and R⁵ to R⁸ may be linked to form a ring,
with the proviso that at least one out of R¹ to R⁸ represents a nitro group or a trifluoromethyl group;
An^{m-} represents an anion of valency m, m represents an integer of 1 or 2, and p represents a coefficient to keep charge neutral.

2. The light-diffusing resin composition according to claim 1, wherein the composition comprises 1 to 80% by mass of the binder resin (A), 15 to 95% by mass of the light-diffusing agent (B), and 0.0001 to 5% by mass of the trimethine cyanine compound (C) represented by the general formula (I).

3. A light-diffusing sheet comprising a transparent substrate layer and a light-diffusing layer formed on at least one side of the substrate layer, wherein the light-diffusing layer is made of the light-diffusing resin composition according to claim 1 or 2.

4. A light source unit comprising a light-diffusing sheet according to claim 3 and a light source.

5. The light source unit according to claim 4, wherein the light source is a white LED.
